# FASCICULE DE BREVET EUROPEEN

(11) **EP 0 858 553 B1**
(45) Date de publication et mention de la délivrance du brevet: **09.08.2000**
(21) Numéro de dépôt: 96938261.3
(22) Date de dépôt: 31.10.1996
(51) Int. Cl.: F01P 3/20, F01P 11/20, F02N 17/06, F01N 3/20

(54) **SYSTEME DE REFROIDISSEMENT D'UN VEHICULE A MOTEUR A COMBUSTION INTERNE**
KÜHLUNGSANLAGE FÜR EIN KRAFTFAHRZEUG MIT EINEM VERBRENNUNGSMOTOR
COOLING SYSTEM FOR A VEHICLE WITH AN INTERNAL COMBUSTION ENGINE

(30) Priorité: 02.11.1995 FR 9512945
(43) Date de publication de la demande: 19.08.1998
(73) Titulaire: RENAULT, 92109 Boulogne-Billancourt (FR)
(72) Inventeur: ANGRAND, Bruno, F-76520 Franqueville (FR)
(74) Mandataire: Fernandez, Francis
(86) Numéro de dépôt international: FR9601712
(87) Numéro de publication internationale: WO9716633

(56) Documents cités:
- DE-A- 4 328 715
- DE-C- 4 335 771
- GB-A- 2 117 187
- US-A- 4 864 974
- PATENT ABSTRACTS OF JAPAN vol. 012, no. 484 (M-776), 16 Décembre 1988 & JP,A,63 203410 (TOYOTA MOTOR CORP), 23 Août 1988,
- PATENT ABSTRACTS OF JAPAN vol. 010, no. 349 (M-538), 26 Novembre 1986 & JP,A,61 149537 (NISSAN MOTOR CO LTD), 8 Juillet 1986,

## Description

L'invention concerne les véhicules entraînés par un moteur à combustion interne et, plus particulièrement dans de tels véhicules, un système pour refroidir et/ou chauffer le moteur tout en permettant le chauffage de l'habitacle du véhicule en cas de besoin.

La plupart des moteurs à combustion interne pour les véhicules automobiles sont équipés d'un système de refroidissement qui est principalement constitué d'un circuit fermé de circulation d'un fluide de refroidissement entourant le moteur. Le refroidissement du fluide est obtenu par son passage dans un ou plusieurs radiateurs grâce à une pompe de circulation.

L'un des radiateurs est placé dans l'habitacle du véhicule pour le chauffer en cas de besoin par l'intermédiaire d'un échangeur "fluide/air".

Il est connu qu'un moteur à combustion interne a un rendement optimum lorsque le fluide de refroidissement est à une température déterminée qui n'est atteinte qu'après un intervalle de temps de plusieurs minutes de fonctionnement du moteur. Pendant cet intervalle de temps, la combustion est mauvaise et il en résulte une émission plus importante de polluants. Il y a donc un grand intérêt à réduire cet intervalle de temps.

Un but de l'invention est donc de réaliser un système de refroidissement d'un moteur à combustion interne qui réduise cet intervalle de temps pour atteindre la température de fonctionnement désirée du fluide de refroidissement.

Par suite de l'amélioration du rendement des moteurs à combustion interne, par exemple dans le cas des moteurs diesel à injection directe, pour une puissance donnée du moteur, la puissance thermique cédée au fluide de refroidissement diminue et il en résulte un manque de puissance thermique pour chauffer l'habitacle du véhicule dans certaines circonstances climatiques.

Pour pallier ce déficit en puissance thermique de chauffage de l'habitacle, il a été proposé plusieurs solutions telles que l'utilisation de résistances électriques ou composants thermoélectriques chauffant directement l'air de l'habitacle, d'un échangeur sur le circuit d'échappement des gaz, de récupération de chaleur, etc ... .

La solution de la résistance électrique chauffante conduit à une consommation électrique accrue et donc à une augmentation de la consommation de carburant. Les autres solutions citées ont un rendement thermique insuffisant et un coût élevé.

Un autre but de la présente invention est donc de réaliser un système de refroidissement d'un moteur à combustion interne qui pallie ce déficit en puissance thermique de chauffage de l'habitacle tout en optimisant le rendement global du système.

Ces buts sont atteints en apportant des calories au système de refroidissement par des résistances électriques et en utilisant un générateur électrique du type à refroidissement par le fluide de refroidissement du moteur à combustion interne. Ce principe est connu du document GB-A-2 117 187.

De cette manière, la puissance thermique supplémentaire dégagée par le générateur électrique par suite du fonctionnement des résistances électriques est récupérée par le système de refroidissement.

L'invention concerne un système de refroidissement d'un véhicule à moteur à combustion interne tel que défini dans la revendication 1.

Les composants thermoélectriques de chauffage sont disposés dans le circuit de refroidissement et/ou dans l'air de l'habitacle.

Le dispositif de commande comprend au moins un interrupteur en série avec les résistances des composants thermoélectriques qui est commandé par un calculateur qui reçoit les mesures relevées par les capteurs.

D'autres caractéristiques et avantages de la présente invention apparaîtront à la lecture de la description suivante d'exemples particuliers de réalisation, ladite description étant faite en relation avec les dessins joints dans lesquels :
- la figure 1 est un schéma d'un système de refroidissement selon l'invention dans lequel le générateur électrique est en série avec le moteur dans le circuit de circulation du fluide de refroidissement,
- la figure 2 est un schéma d'un système de refroidissement selon l'invention dans lequel le générateur électrique est en parallèle avec le moteur dans le circuit de circulation du fluide de refroidissement,
- la figure 3 est un schéma électrique du dispositif de commande de l'alimentation des composants thermoélectriques de chauffage dans le cas d'un seul interrupteur,
- la figure 4 est un schéma électrique du dispositif de commande de l'alimentation des composants thermoélectriques de chauffage dans le cas de plusieurs interrupteurs,
- la figure 5 est un diagramme montrant des courbes de variation de la température du fluide de refroidissement en fonction du temps à compter du démarrage à froid du moteur, et
- la figure 6 est un diagramme montrant une courbe de variation de la température de l'habitacle en fonction du temps.

Dans les différentes figures, les mêmes références désignent des éléments identiques dans des fonctions identiques.

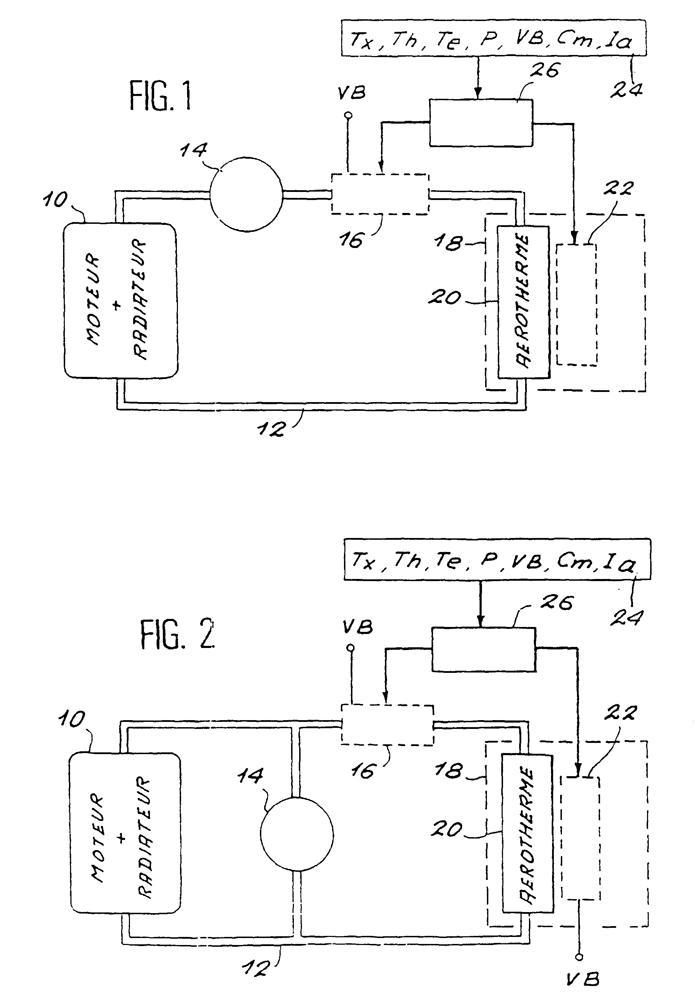

Un système de refroidissement d'un véhicule à moteur à combustion interne selon l'invention comprend (figures 1 et 2) un circuit fermé 12 de circulation d'un fluide de refroidissement, en général un liquide tel que l'eau, qui inclut de manière classique le moteur 10 associé à son radiateur, un générateur électrique 14 pour fournir la puissance électrique nécessaire au véhicule et un aérotherme 20 pour le chauffage de l'habitacle 18 du véhicule.

Le générateur électrique 14 peut être en série avec les autres éléments du circuit de refroidissement (figure 1) ou en parallèle (figure 2). Ce générateur électrique 14, en général un alternateur, est du type à refroidissement par le liquide de refroidissement du moteur.

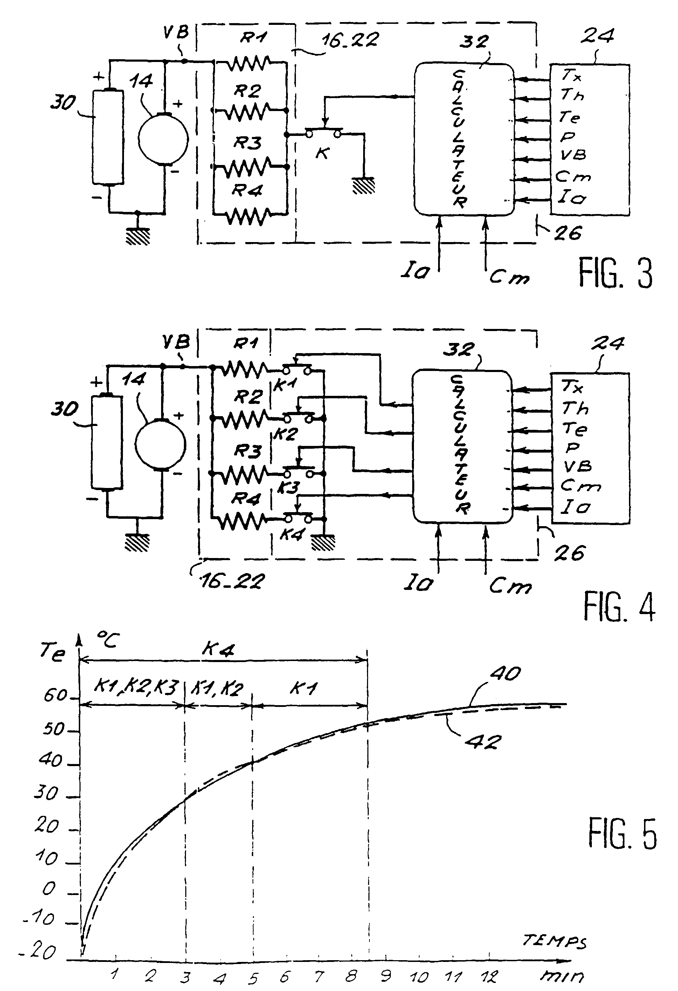

Selon l'invention, le système de refroidissement comprend, en outre, séparément ou cumulativement, au moins une résistance de chauffage 16, ou plus généralement un composant thermoélectrique, qui est disposée dans le circuit de circulation 12 et au moins une résistance de chauffage 22, ou plus généralement un composant thermoélectrique, qui est disposée dans l'air de l'habitacle 18. Ces résistances 16 et 22 sont alimentées électriquement par une batterie 30 (figures 3 et 4) du véhicule à la tension VB et leur connexion à la batterie est sous le contrôle d'un dispositif de commande 26.

D'autres composants thermoélectriques peuvent être mis en oeuvre, notamment dans le pot catalytique du véhicule pour permettre son réchauffement afin qu'il atteigne rapidement sa température optimale de fonctionnement.

Comme le montrent les schémas électriques des figures 3 et 4, l'alternateur 14 charge la batterie 30 dont la borne négative est à la masse tandis que la borne positive fournit la tension VB. Cette tension VB est appliquée à une extrémité des résistances chauffantes R1, R2, R3 et R4 en parallèle, l'autre extrémité des quatre résistances étant connectée à une borne d'un seul interrupteur K dans le cas du schéma de la figure 3 et à une borne de chacun des quatre interrupteurs K1, K2, K3 et K4 dans le cas du schéma de la figure 4. L'autre borne des interrupteurs K, K1, K2, K3 et K4 est connectée à la masse.

L'ouverture et la fermeture des interrupteurs sont commandés par un circuit électronique 32 tel qu'un calculateur ou microprocesseur.

Le calculateur 32 fournit les signaux de commande des interrupteurs en fonction d'une combinaison d'un certain nombre de conditions et de variables relevées dans le véhicule à l'aide de capteurs 24 telles que :
- la température d'air extérieure Tx,
- la température d'air de l'habitacle Th,
- la température du liquide de refroidissement Te,
- la charge de la batterie VB,
- l'état P de la sonde disposée en amont ou en aval du pot catalytique pour mesurer la pollution des gaz d'échappement,
- le couple demandé au moteur Cm,
- le courant délivré par l'alternateur Ia,
- etc, ... .

Ces mesures sont comparées à des valeurs de consigne qui peuvent être discrètes ou sous forme de courbes telles que :
- TRx, la température d'air extérieure de consigne liée à la consigne sous forme d'une courbe de référence,
- TRh, la température d'air de l'habitacle de consigne liée à la consigne sous forme d'une courbe de référence,
- TRe, la température du liquide de refroidissement de consigne liée à la consigne sous forme d'une courbe de référence,
- VRB, la charge de batterie minimale acceptable,
- PR, le niveau de pollution maximale autorisé,
- CRm, le couple maximum qui peut être demandé au moteur,
- IRa, le courant maximum qui peut être délivré par l'alternateur pour une vitesse donnée,
- etc, ... .

Le TABLEAU 1 indique à titre non limitatif quelques combinaisons de conditions pour lesquelles l'interrupteur K de la figure 3 est "fermé" ou "ouvert" tandis que les TABLEAUX 2, 3 et 4 indiquent quelques combinaisons de conditions pour lesquelles les interrupteurs K1, K2, K3 et K4 sont "fermé" ou "ouvert" selon les stratégies programmées.

**TABLEAU 1**

| K | Tx<TRx | Te<TRe | Th<TRh | P>PR | VB<VRB | Cm>CRm | Ia>IRa |
|---|---|---|---|---|---|---|---|
| | OUI | | OUI | | NON | | NON |
| FER | | OUI | | OUI | | NON | |
| | OUI | | OUI | | NON | | NON |
| FER | | NON | | NON | | NON | |
| | NON | | OUI | | NON | | NON |
| FER | | OUI | | OUI | | NON | |
| | OUI | | OUI | | OUI | | OUI |
| OUV | | OUI | | OUI | | NON | |
| | OUI | | OUI | | NON | | NON |
| OUV | | OUI | | OUI | | OUI | |
| | NON | | NON | | NON | | NON |
| OUV | | NON | | NON | | NON | |

La lecture du TABLEAU 1 doit s'effectuer de la manière suivante. L'en-tête du tableau indique les conditions retenues dans la stratégie et les colonnes indiquent si la condition de l'en-tête est remplie (OUI) ou ne l'est pas (NON) sauf la première colonne qui indique l'état fermé "FER" ou ouvert "OUV" de l'interrupteur K. Ainsi, pour la première ligne, l'interrupteur K est fermé si Tx<TRx, Te<TRe, Th<TRh, P>PR, VB>VRB, Cm>CRm et Ia<IRa. Dans cette stratégie, les résistances électriques R1, R2, R3 et R4 sont des thermoplongeurs électriques qui sont disposés dans le circuit de refroidissement 12.

La lecture des TABLEAUX 2, 3 et 4 est semblable à celle du TABLEAU 1 mais la première colonne indique les composants thermoélectriques qui sont alimentés lorsque les conditions des cases de la ligne correspondante sont remplies. La lettre O indique que la condition est remplie tandis que la lettre N indique que la condition n'est pas remplie. Par ailleurs, les nombres indiqués dans les cases sont des températures sauf pour la colonne (VB < VRB) dans laquelle les nombres correspondent à des pourcentages d'état de charge de la batterie.

Dans les stratégies représentées par les TABLEAUX 2, 3 et 4, les composants thermoélectriques R1, R2 et R3 sont des thermoplongeurs disposés dans le circuit de refroidissement 12 tandis que le composant thermoélectrique R4 est une résistance électrique incorporée dans le pot catalytique du véhicule. Les puissances de ces résistances peuvent être identiques, par exemple 250 Watts, soit différentes pour permettre une plus grande souplesse dans la stratégie.

**TABLEAU 2**

| | Tx<TRx | Te<TRe | Th<TRh | P>PR | VB<VRB | Cm>CRm | Ia>IRa |
|---|---|---|---|---|---|---|---|
| R1 | O | O | O | O | N | N | O |
| R2 | -5<12 | 0<30 | 0<9 | | 80<60 | | |
| R3 | | | | | | | |
| R4 | | | | | | | |
| R1 | O | O | O | O | N | N | O |
| R2 | -5<12 | 30<Te<40 | 9<Th<16 | | 80<60 | | |
| et | | | | | | | |
| R4 | | | | | | | |
| R1 | O | O | O | O | N | N | O |
| et | -5<12 | 40<Te<50 | 16<Th<20 | | 80<60 | | |
| R4 | | | | | | | |

La stratégie correspondant au TABLEAU 2 vise le confort de l'habitacle du véhicule et la réduction de la pollution dans le cas de températures extérieures Tx froides au détriment de l'état de charge de la batterie qui va diminuer. La connexion des thermoplongueurs dépend des températures Tx, Te et Th et de l'apport thermique de l'alternateur.

**TABLEAU 3**

| | Tx<TRx | Te<TRe | Th<TRh | P>PR | VB<VRB | Cm>CRm | Ia>IRa |
|---|---|---|---|---|---|---|---|
| R1 | O | O | O | O | N | N | O |
| R4 | -5<12 | 20<50 | 5<20 | | 65<60 | | |

La stratégie correspondant au TABLEAU 3 vise la réduction de la pollution par la connexion de la résistance électrique R4 de chauffage du pot catalytique. Le confort de l'habitacle bénéficie de l'apport thermique de l'alternateur.

**TABLEAU 4**

| | Tx<TRx | Te<TRe | Th<TRh | P>PR | VB<VRB | Cm>CRm | Ia>IRa |
|---|---|---|---|---|---|---|---|
| R1 | O | N | O | N | N | N | O |
| | 5<12 | 60<50 | 10<20 | | 65<60 | | |

La stratégie correspondant au TABLEAU 4 vise à récupérer au mieux les pertes thermiques de l'alternateur car seule la résistance électrique R1 est connectée.

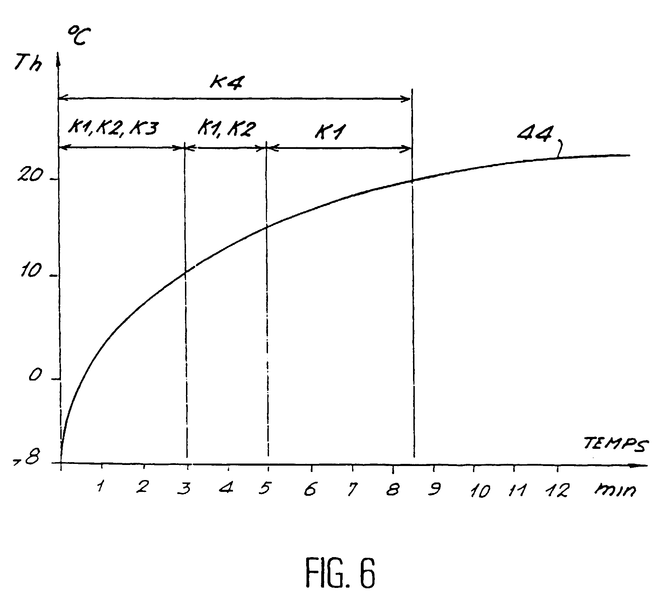

Des stratégies autres que celles décrites ci-dessus peuvent être mises en oeuvre en restant dans le cadre de l'invention. En particulier, il est possible de mettre en oeuvre une stratégie pour que la température Te du liquide de refroidissement suive une courbe de référence, par exemple celle référencée 40 sur la figure 5. La courbe, référencée 42, est la courbe réelle de variation de la température Te qui est obtenue en fermant les interrupteurs K1, K2 et K3 pendant les trois premières minutes, les interrupteurs K1 et K2 pendant les deux minutes suivantes, puis seulement l'interrupteur K1 pendant les trois minutes et demie suivantes, l'interrupteur K4 étant fermé pendant toute la durée de la montée en température.

La figure 6 indique la courbe de référence de la température Th de l'habitacle en fonction du temps. La stratégie prévue est identique à celle mise en oeuvre pour la température Te en relation avec la figure 5.

Comme indiqué ci-dessus, le dispositif de commande 32 est de préférence un calculateur ou microprocesseur convenablement programmé selon différentes stratégies du genre décrit en relation avec les TABLEAUX 1, 2, 3 et 4 et dédié à ce type d'opérations mais il est clair que ces opérations peuvent être réalisées par le calculateur d'injection du moteur s'il est suffisamment puissant.

Le système de refroidissement incluant l'alternateur et des résistances électriques selon l'invention permet d'optimiser le rendement global et la puissance thermique cédée au liquide de refroidissement par l'alternateur et les composants thermoélectriques. En effet, la puissance directe qui est induite dans le liquide de refroidissement par l'alternateur augmente avec la puissance électrique des composants thermoélectriques. De plus, la puissance indirecte qui est passée dans le liquide de refroidissement est due à l'augmentation de couple du moteur liée à l'alternateur.

Enfin, le rendement global est amélioré du fait que les pertes de l'alternateur sont récupérées par le liquide de refroidissement.

Le système selon l'invention permet de récupérer systématiquement la puissance perdue induite dans l'alternateur pour fournir les besoins électriques de base du réseau électrique de bord. De plus, lorsque les composants thermoélectriques fonctionnent, la puissance perdue induite dans l'alternateur est récupérée dans le liquide de refroidissement, ce qui permet d'augmenter le rendement de ces composants pour atteindre et dépasser 90 %.

## Revendications

1. Système de refroidissement d'un véhicule à moteur à combustion interne qui comprend un circuit fermé (12) de circulation d'un fluide de refroidissement incluant ledit moteur (10), un générateur électrique (14) et des composants thermoélectriques de chauffage (16, 22, R1, R2, R3, R4), lesdits composants thermoélectriques étant alimentés par ledit générateur électrique (14) par l'intermédiaire d'un calculateur (32) commandant l'ouverture ou la fermeture d'au moins un interrupteur (K, K1, K2, K3, K4) en fonction des mesures relevées par des capteurs (24) mesurant chacun un paramètre de fonctionnement du véhicule, caractérisé en ce que lesdits capteurs mesurent séparément la température du fluide de refroidissement (Te) et la température extérieure (Tx), celle de l'habitacle (Th), la charge de la batterie (VB), le niveau de pollution (P) des gaz d'échappement, le couple (Cm) demandé au moteur et le courant (Ia) du générateur électrique.

2. Système selon la revendication 1, caractérisé en ce qu'au moins un composant thermoélectrique de chauffage (16) est disposé dans le circuit fermé (12) de circulation du fluide de refroidissement et en ce que le calculateur (32) est programmé de manière à commander l'ouverture ou la fermeture d'au moins un interrupteur (K, K1, K2, K3, K4) pour faire évoluer la température (Te) du liquide de refroidissement en fonction du temps selon une courbe déterminée (40).

3. Système selon la revendication 1 ou 2, caractérisé en ce qu'au moins un composant thermoélectrique de chauffage (22) est disposé dans l'air de l'habitacle du véhicule et en ce que le calculateur (32) est programmé de manière à commander l'ouverture ou la fermeture dudit interrupteur (K, K1, K2, K3, K4) pour faire évoluer la température (Th) de l'habitacle en fonction du temps selon une courbe déterminée (4).

## Patentansprüche

1. Kühlsystem für ein Fahrzeug mit Verbrennungsmotor, welches einen geschlossenen Kühlkreislauf (12) für ein Kühlfluid aufweist, das den Motor (10) einschließt, einen elektrischen Generator (14), sowie thermoelektrische Heizbauteile (16, 22, R1, R2, R3, R4), wobei diese thermoelektrischen Bauteile vom elektrischen Generator (14) gespeist werden, mit Hilfe eines Rechners (32), welcher das Öffnen oder das Schließen wenigstens eines Schalters (K, K1, K2, K3, K4) als Funktion der von Fühlern (24) abgegebenen Messwerte steuert, wobei jeder Fühler einen Betriebsparameter des Fahrzeugs überwacht, dadurch gekennzeichnet, dass die Fühler getrennt die Temperatur des Kühlfluids (Te) und die Außentemperatur (Tx), diejenige des Fahrgastraums (Th), die Batterielast (VB), die Höhe der Umweltverschmutzung (P) der Abgase, das vom Motor verlangte Drehmoment (Cm) und den Strom (Ia) des elektrischen Generators messen.

2. System nach Anspruch 1, dadurch gekennzeichnet, dass wenigstens ein thermoelektrisches Heizbauteil (16) im geschlossenen Kühlkreislauf (12) für das Kühlfluid angeordnet ist, und dass der Rechner (32) derart programmiert ist, dass er ein Öffnen oder ein Schließen wenigstens eines Schalters (K, K1, K2, K3, K4) steuert um eine Entwicklung der Temperatur (Te) der Kühlflüssigkeit als Funktion der Zeit gemäß einer vorgegebenen Kurve (40) zu steuern.

3. System nach Anspruch 1 oder 2, dadurch gekennzeichnet, dass wenigstens ein thermoelektrisches Heizbauteil (22) im Fahrgastraum des Fahrzeugs angeordnet ist, und dass der Rechner (32) derart programmiert ist, dass er das Öffnen oder das Schließen der Schalter (K, K1, K2, K3, K4) steuert um eine Entwicklung der Temperatur (Th) im Fahrgastraum als Funktion der Zeit gemäß einer vorgegebenen Kurve (4) zu steuern.

## Claims

1. A cooling system for a vehicle with an internal combustion engine which comprises a closed circuit (12) for the circulation of a cooling fluid including the engine (10), an electrical generator (14) and thermoelectric heating components (16, 22, R1, R2, R3, R4), these thermoelectric components being supplied by the electrical generator (14) by means of a computer (32) controlling the opening or closing of at least one switch (K, K1, K2, K3, K4) as a function of measurements detected by sensors (24) each measuring an operating parameter of the vehicle, characterised in that these sensors separately measure the temperature of the cooling fluid (Te) and the external temperature (Tx), the temperature of the passenger space (Th), the battery charge (VB), the level of pollution (P) of the exhaust gases, the torque (Cm) required from the engine and the current (Ia) from the electrical generator.

2. A system as claimed in claim 1, characterised in that at least one thermoelectric heating component (16) is disposed in the closed circuit (12) for the circulation of the cooling fluid and in that the computer (32) is programmed so as to control the opening or closure of at least one switch (K, K1, K2, K3, K4) in order to cause the temperature (Te) of the cooling fluid to evolve as a function of time according to a predetermined curve (40).

3. A system as claimed in claim 1 or 2, characterised in that at least one thermoelectric heating component (22) is disposed in the air of the passenger space of the vehicle and in that the computer (32) is programmed to control the opening or closure of the switch (K, K1, K2, K3, K4) in order to cause the temperature (Th) of the passenger space to evolve as a function of time according to a predetermined curve (4).
